# EUROPEAN PATENT APPLICATION

(11) **EP 4 414 746 A1**
(43) Date of publication of application: **14.08.2024**
(21) Application number: 23198769.4
(22) Date of filing: 21.09.2023
(51) Int. Cl.: G01S 13/86, G01S 7/41, G01S 13/72, G01S 13/931, G01S 13/58, G01S 13/08, G01S 7/48

(54) **MULTI-OBJECT DETECTION AND TRACKING**

(30) Priority: 08.02.2023 IN 202341008207
(71) Applicant: Continental Autonomous Mobility Germany GmbH, 85057 Ingolstadt (DE)
(72) Inventor: Gheorghe, Ionut-Valentin, 300704 Timisoara (RO); Kumari, Beena, 300704 Timisoara (RO); Dr. Hellert, Christian, 300704 Timisoara (RO)
(74) Representative: Continental Corporation

(57) **Abstract**

The present invention is related to a multi-Object Detection and Tracking method and system based on AI techniques. According to invention, a computer-implemented method is provided for object detection and tracking of at least one object in an ego vehicle environment. The method uses a hybrid neural network adapted to:
(i) input raw sensor data, generated by at least one camera sensor and at least one radar sensor of the ego vehicle, namely raw camera data and raw radar data,
(ii) process independently raw camera data and raw radar data to generate object detections, to extract respective features from respective raw sensor data, meaning visual features extracted from raw camera data and depth features extracted from raw radar data, and to extract feature embeddings for each detected object,
(iii) fusion of the extracted visual and depth features, and generate fused object detections,
(iv) generating, from the extracted embeddings, tracks for each detected object, and
(v) associating the generated fused object detections to tracks.

In addition, the invention provides a computing system for end-to-end multi-object detection and tracking.

## Description

The present invention relates to an Al-based method and system of object detection and tracking, to be deployed on an autonomous or semi-autonomous vehicle to determine the presence, location, shape, and other attributes (e.g., heading, velocity etc.) of objects in a vicinity of the vehicle.

Object detection is an important computer vision task used to detect instances of visual objects of certain classes (for example, pedestrians, animals, bicycles, cars, or buildings) in digital images. Object tracking, by definition, is to track an object (or multiple objects) over a sequence of images. Difficulties in detecting and tracking objects can arise due to abrupt object motion, changing appearance patterns of both the object and the scene, non-rigid object structures, object-to-object and object-to-scene occlusions, and sensor (e.g., camera) motion. Both detection and tracking are usually performed in the context of higher-level applications that require the location and/or shape of the object in every frame.

There are numerous patents disclosing various object detection or tracking techniques on autonomous vehicles. [1] KR20200106234A describes an autonomous vehicle system that uses a plurality of fusion units. Each unit fuses information obtained from a plurality of sensors. A first sensor fusion unit generates primary fusion information for dynamic objects from a combination of radar and camera (e.g., vehicles, bicycles, pedestrians etc.), using a predefined fusion algorithm. A second sensor fusion unit synchronizes camera object information, primary fusion object information, and LIDAR object information acquired through a LIDAR sensor mounted on a vehicle. In this process, the first fusion object information may be corrected using LIDAR object information which may include information on both dynamic objects as well as static objects (e.g., traffic lights, fixed obstacles, etc.) located around the vehicle. It is expected that a pre-processing unit will handle the calibration and synchronization (i.e., in space and time) between different sensors. Tracking is handled by a tracking unit through prediction, data association, and update methods according to a general target tracking algorithm.

The first fusion object information and the LIDAR object information are information obtained through separate tracking processes, respectively, and additional tracking is performed through the tracking unit to reduce a tracking error for a corresponding object. [2] EP3196668A1 describes an object tracking system that fuses information from a radar sensor and a camera to determine relative motion of objects. The said system is applicable to a host automated vehicle. The object tracking system includes or employs a fusion tracker used to combine information from host-vehicle sensors such as a speed-sensor and a yaw-rate-sensor, and object detection sensors such as a radar-sensor and a camera. The information is combined to (more accurately) estimate the number and identity of objects present in an area near the host-vehicle, and estimate, for example, position, velocity, trajectory, etc. of each object of interest. [3] CN111967498A describes a night target detection and tracking method applicable to the field of unmanned driving perception. Therefore, the system side is fairly generic. Millimeter wave radar data (i.e., raw radar data) is processed to obtain the first target track of the effective target, by removing the invalid targets, stationary targets, redundant data. Original image (i.e., camera) is processed to obtain the second target track of the effective target, by first applying a pre-processing step to brighten the original image, assuming a night-time scenario. This brightening step is performed using a fully convolutional neural network. Subsequently, the brightened original image is used to obtain the second target track using a Deep-SORT network approach. This is known as tracking-by-detection strategy where track association considers both motion and appearance features. Finally, fusion matching is performed between second target track (i.e., the image effective target that has successfully associated the motion feature and the appearance feature) and the first target track (i.e., the radar track projected into pixel coordinate system). [4] CN111862157A describes a multi-vehicle target tracking method based on the fusion of machine vision and millimeter wave radar for an intelligent and autonomous vehicle application. The millimeter wave radar data is filtered to obtain vehicle targets. Separately, given a road environment (e.g., camera) image, a deep neural network model is used to detect surrounding vehicles and obtain position and size information of the visual tracking target. A predetermined fusion model (strategy) for millimeter wave radar and camera associates a (radar) vehicle target with a (camera) visual tracking target.

Another segment of prior art is related to the autonomous vehicles that use learned re-identification features for tracking. Patent application [5] CN110246159A describes a method for obtaining 3D target information such as 3D coordinates, speed, direction, using visual and laser radar information, for autonomous vehicles. It is important to note that laser radar information is assumed to provide x, y, z point cloud readings making it akin to a LIDAR. Typically, the difference is that normal LIDAR is a moving (i.e., rotating) device used to obtain scan lines whereas laser radar is static. The camera image is processed to obtain semantic and instance segmentations using a trained Mask-RCNN model. Separately, a trained ResNet50 model (i.e., a feature extraction architecture) is used to compute a deep feature representation for each vehicle and each pedestrian in all detections provided by Mask-RCNN algorithm above. The important thing to note here is that the ResNet50 model above is trained separately on re-identification datasets, for both vehicles and pedestrians. The ResNet50 will create a deep feature representation (also known as embedding) that is invariant with respect to view changes of the same object. For example, the same person facing sideways should amount to a similar feature embedding to when that person is facing forward or backward. This is also the case for the vehicle class. However, this re-dentification aspect is only used for pixels i.e., camera image; radar information is not part of the training process for learning re-identification features (embeddings). This solution requires at least two networks (i.e., instance segmentation and image classification) to be trained using separate labelled datasets. The former is trained on an instance segmentation dataset, the latter is trained on a re-identification dataset.

Apart from patent literature, scientific literature is available on recent progress in visual tracking techniques (camera only) and object detection using radar and camera fusion. Research paper [6] entitled "Center-based Radar and Camera Fusion for 3D Object Detection ", authors Ramin Nabati, Hairong Qi, published at 3-8 January 2021, in the 2021 IEEE Winter Conference on Applications of Computer Vision (WACV), DOI: 10.1109/WACV48630.2021.00157, describes a computer vision method of 3D object detection using fused radar and camera. The method consists of two processing branches where at least one branch is convolutional in nature. One branch is used to ingest camera image data into a CenterNet (i.e., a standard object detection architecture). This branch processes the image data into a primary regression head where object's spatial extent and other attributes can be decoded. A parallel branch processes the corresponding radar point-cloud using a pillar expansion followed by a frustum association mechanism whereby radar attributes can be assigned to an object detection via a secondary regression head. Finally, this mid-level fusion approach is able to be decoded within the box decoder which considers both the primary as well as secondary regression heads. Through experiments it is demonstrated that this mid-level radar camera fusion achieves greater object detection performance than camera alone, especially for estimating vehicle distances and velocities. Research paper [7] entitled "Detection Embeddings for Tracking ", authors Mohamed Chaabane, Peter Zhang, J. Ross Beveridge, Stephen O'Hara, published at 6 June, 2021, arXiv:2102.02267, describes a multi-object tracking system that uses Detection Embeddings For Tracking (DEFT) which relies on an appearance-based object matching network jointly learned with an underlying object detection network. A unique annotated dataset is required for training. The important thing to note here is that the appearance-based object matching network, which is responsible for generating embeddings for a tracking-by-detection strategy, is a re-identification subnetwork within the same object detection network. In other words, a single convolutional neural network is trained to achieve both object detection as well as object identity embeddings. This is essentially a reuse of multi-scale features with the addition of a small module within the detection network. DEFT has significant advantages, especially in challenging scenarios with large object displacements from one frame to another. DEFT uses a CenterNet with a fully convolutional backbone too, except there is no radar branch here. For each detected object, feature embeddings are extracted from the estimated object's center location. Finally, a tracking-by-detection strategy follows during testing. A motion forecasting module prevents implausible trajectories, and the Hungarian algorithm makes the association of objects to tracks.

Despite the interest reflected by the abundant patent and non-patent literature reviewed on the topic, current approaches considering fused radar-camera tracking tend to use just the camera or image data with a tracking-by-detection strategy. Fusion with radar tends to be handled on a post-processing step where visual (i.e., camera only) tracks are simply instilled with radar attributes. In most cases, a cluster of radar points are simply allocated to a plausible bounding box, given their proximity (or a metric definition of proximity thereof). Radar information is rarely learned or associated with an object detection using a convolutional neural network branch.

In this context, the technical problem to be solved is how to simultaneously support an end-to-end joint learning of low (or mid) level camera-radar fusion for object detection and re-identification features for object tracking by means of a unique neural network.

It is an object of the present invention to provide a multi-object detection and tracking solution to this challenging problem. This object is solved by a method and a system with the features from independent claims.

According to a first aspect of the invention, there is provided a method for object detection and tracking of at least one object in an ego vehicle environment. The method uses a learned hybrid neural network adapted to:
(i) input raw sensor data, generated by at least one camera sensor and at least one radar sensor of the ego vehicle, namely raw camera data and raw radar data,
(ii) process independently raw camera data and raw radar data to generate object detections, to extract respective features from respective raw sensor data, meaning visual features extracted from raw camera data and depth features extracted from raw radar data, and to extract feature embeddings for each detected object,
(iii) fusion of the extracted visual and depth features, and generate fused object detections,
(iv) generating, from the extracted embeddings, tracks for each detected object, and
(v) associating the generated fused object detections to tracks.

The method according to invention secures a more accurate radar and camera data fusion and provides enriched information (the features described above may contain not just radar range information, but also other radar attributes e.g., reflectivity signature, velocities etc.). Other advantages are robustness to drastic object view changes, as well as correct occlusion handling.

According to a second aspect of the invention, there is provided a method for generating an end-to-end hybrid neural network for multi-object detection and tracking. The method for generating the learned hybrid neural network comprises providing a common annotated training dataset obtained by processing raw sensor data, namely pairs of consecutive camera and radar frames, n frames apart. The training dataset comprises each object detected in the raw sensor data annotated with a 3D bounding box, and tracks identifiers for each object detected on consecutive camera and radar frames. Further on, the method comprises training a hybrid neural network on the single annotated training dataset. The hybrid neural network comprises a raw radar data processing branch adapted to generate object detections and depth features for each object detected in radar data, and a detector backbone which processes raw camera data and generates object detections and visual features for each object detected in camera data. The detections extracted from radar and camera data, respectively, are fused by a sensor data fusion module integrated in the detector backbone. The method comprises processing visual and depth features extracted from camera and radar data, respectively, by an embedding extractor, and providing respective feature embeddings for each object detected in the sensor data, meaning radar feature embeddings and camera feature embeddings. The method performs re-identification of the features by matching, by a matching head, similar fused detections provided by the sensor fusion module using as input data the respective feature embeddings generated by the embedding extractor and generating tracks of detected objects. The generating fused object detections and generating tracks for each detected object are simultaneously performed.

By leveraging an end-to-end learning process using a common dataset to achieve performant tracking, fusion, and object detection at the same time, the training method according to invention is advantageous by robustness of tracking and re-identification of road participants even in case of occlusions. Learning the correct radar to camera bounding box associations automatically from annotated data amounts to a more accurate radar and camera fusion.

According to a third aspect of the invention, a dataset is presented. The dataset is generated as an output of the method according to the second aspect.

According to a fourth aspect of the invention, there is provided an end-to-end multi-object detection and tracking computing system. The system may comprise a memory, and at least one processor communicatively coupled to the memory, and memory storing one or more programs for execution by the one or more processors one or more programs. The computing system may be configured to receive from at least one camera sensor and at least one radar sensor of the ego vehicle, raw sensor data, namely pairs of consecutive camera and radar frames, n frames apart; to process the provided raw sensor data and generating an annotated dataset that comprises each object detected in the raw sensor data annotated with a 3D bounding box, and tracks identifiers for each object detected on consecutive camera and radar frames. Further on, to train, by a training module, a hybrid neural network to simultaneously perform camera-radar sensor fusion, object detection, and object tracking on the annotated dataset, and to deploy a trained fusion learning model. Finally, to infer, by an inference module, the trained fusion model to process raw sensor data, to detect objects and to track the detected objects.

The computing system according to invention is advantageous due to robust detection and tracking on all weather and illumination conditions (due to the complementary strengths of radar and camera), and better handling of large and small object detection and tracking because of local and global multi-scale features.

According to a fifth aspect of the present disclosure, an apparatus for object tracking is presented. The apparatus includes at least one processor, and at least one memory, coupled to the at least one processor, configured to execute method according to the first aspect.

According to a sixth aspect of the present disclosure, a computer-readable medium for object tracking is presented. The computer-readable medium stores computer-executable instructions, wherein the computer-executable instructions when executed cause at least one processor to execute method according to the first aspect.

The dependent claims include advantageous further developments and improvements of the present invention.

Further features of the present invention will become apparent from the following description and the appended claims in conjunction with the figures. Like reference numerals are used in the figures for the same or equivalent elements and are not necessarily described again for each figure. It is to be understood that the invention is not limited to the illustrated embodiments.

### Figures

Fig. 1 shows schematically a ground level projection of radar points cloud and camera data, from an ego vehicle perspective,
Fig. 2 shows an embodiment of an architecture of a hybrid neural network, designed for joint training,
Fig. 3 shows an embodiment of an architecture of a hybrid neural network, designed for inference,
Fig. 4 shows a diagram of a method of generating a trained fusion model, according to invention,
Fig. 5 presents a tracking framework used during inference,
Fig. 6 illustrates an embodiment of a multi-object detection and tracking computing system, according to invention.

### Detailed description

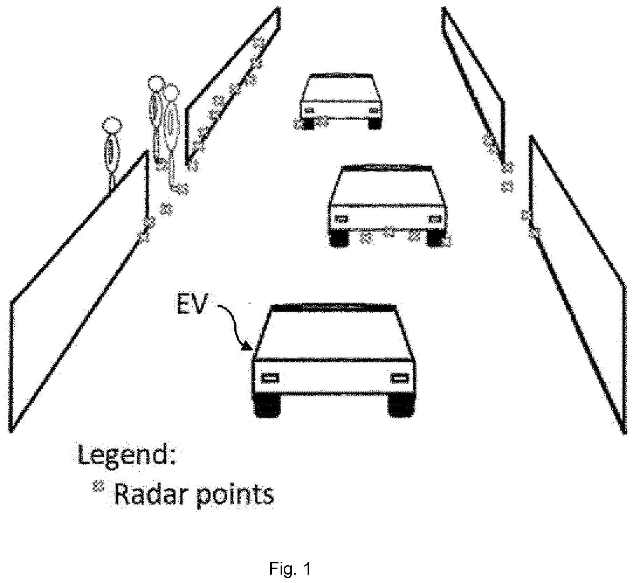

Figure 1 schematically shows ground level projection of radar points cloud and camera data from an ego vehicle EV perspective. Ego vehicle EV is set-up with a suite of radar and camera sensors (not illustrated - it could be a single camera and radar set-up or a plurality of such sensors thereof), allowing for surround view of all traffic participants (other vehicles, bicycles, surrounding objects, pedestrians etc.).

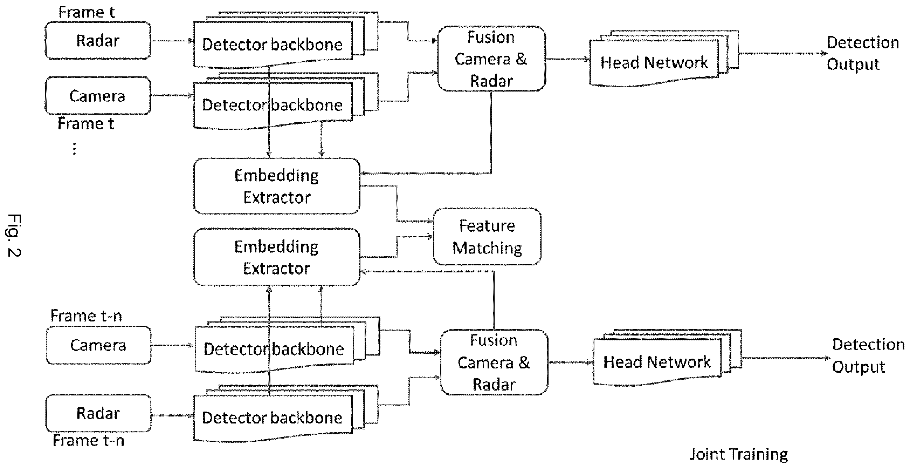

Fig. 2 shows an embodiment of an architecture of a hybrid neural network according to invention, namely a fused detection embeddings for tracking (or Fused DEFT) neural network, by means of which appearance feature for object-track association may be learned by jointly training the object detection, sensor fusion and feature matching. In essence, there are provided two independent branches, namely a radar detector backbone and a camera detector backbone, operating as object detectors and feature extracting. Respective branches employ different architectures; for example, the radar detector backbone employs a CenterFusion network architecture, as described by [6], and the camera detector backbone is derived from DEFT network architecture, as described by [7]. Respective detector backbones are both convolutional neural networks, able to detect object in the sensor data provided and to extract visual features from camera data, as well as depth features from radar data. It has been adopted the term of "depth features" for the set of features extracted from radar data in order to make a difference against visual features; however, depth features are not limited to depth, but include range, velocity, rotational velocity, as well as radar attributes, such as reflectivity signatures. Visual features include center location, orientation, dimensions such as height, width, length.

Nevertheless, the Fused DEFT architecture includes low or mid-level fusion of camera and radar data for object detection and feature matching. Object appearance features are learned for detection and object track association by jointly training the object detection, sensor fusion (low or mid) and feature matching in a single network. The feature matching means re-identification of features, which is not part of the state-of-the-art techniques. Therefore, a crucial point for this invention is that radar information is learned and associated with an object detection using a convolutional neural network branch; also, that radar data is part of the training for learning re-identification features.

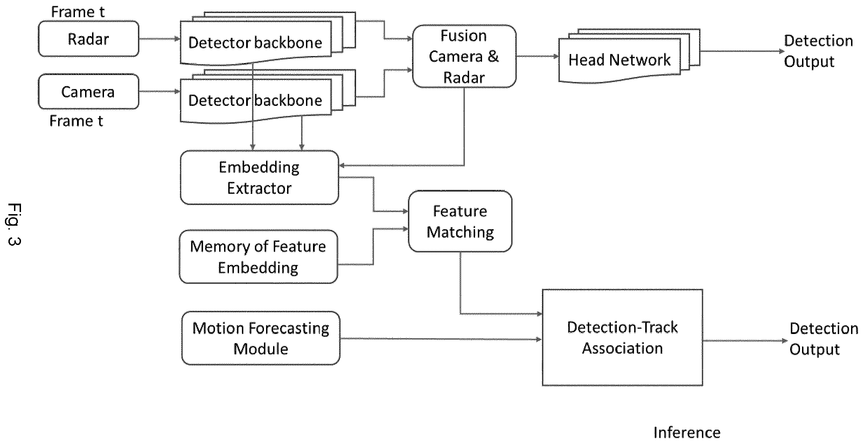

Fig. 3 shows an embodiment of an architecture of a hybrid neural network according to invention, designed for inference, namely a fused detection embeddings for tracking (or Fused DEFT) neural network, by means of which the object detection, sensor fusion and feature matching are performed at the same time. Data frames from radar, respective camera sensors may be received to independent detector backbones configured to learn how to extract and generate object detections and preliminary object features from the respective raw sensor data. The generated object detections and preliminary object features may be fused by a sensor data fusion module. At the same time, the object detections and the preliminary features generated by the detector backbones are sent to an embedding extractor module, that also receives the fused sensor data, and is able to extract feature embeddings from each object detected. Said embeddings would be a weighted combination of both radar and camera features independently extracted. A feature matching module re-identifies the detected objects, by means of a matching head, matching similar fused detections provided by the sensor fusion module, using as input data the respective feature embeddings generated by the embedding extractor, and generating tracks of detected objects. Generating fused object detections and generating tracks for each detected object are simultaneously performed.

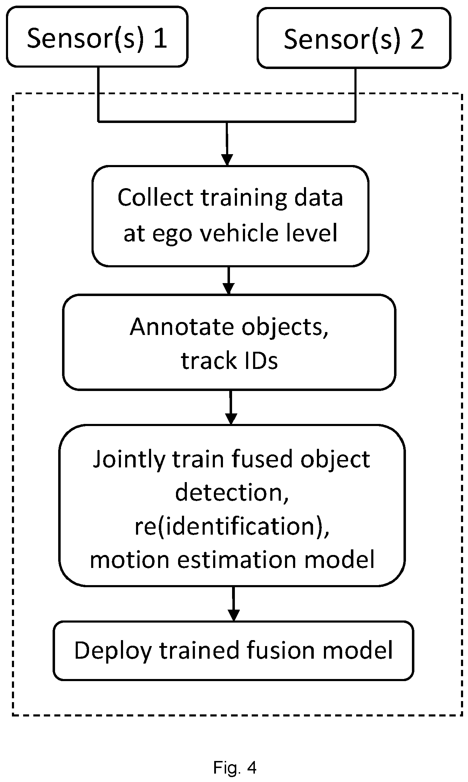

Fig. 4 presents a flow chart of a method of generating an end-to-end hybrid neural network for multi-object detection and tracking. The mentioned method comprises collecting training data at ego vehicle level, more specifically raw sensor data, namely pairs of consecutive camera and radar frames, n frames apart. The raw camera data comprise consecutive image frames generated by camera sensor(s), and the raw radar data comprise consecutive points cloud generated by radar sensor(s). The camera and radar data are calibrated at the ego vehicle level. Based on these training data, an annotated training dataset is further obtained by processing raw sensor data. The annotated training dataset comprises each object detected in the raw sensor data annotated with a 3D bounding box, as well as tracks identifiers for each object detected on consecutive camera and radar frames. The annotated training dataset is fed to the hybrid neural network as already described. The radar detector backbone that processes raw radar data generates object detections and depth features for each object detected in radar data. The camera detector backbone which processes raw camera data generates object detections and visual features for each object detected in camera data.

Both detections extracted from radar and camera data, respectively, are fused at low or mid-level by a sensor data fusion module integrated in the hybrid neural network. The trained model is a Fused DEFT model, and it is used during inference for robust multi-object detection and tracking. The method further comprises learning processing visual and depth features extracted from camera and radar data, respectively, by an embedding extractor, and providing respective feature embeddings for each object detected in the sensor data, meaning radar feature embeddings and camera feature embeddings. Re-identification of the detected objects is learned by matching, by a matching head, similar fused detections provided by the sensor fusion module, using as input data the respective feature embeddings generated by the embedding extractor, and generating tracks of detected objects. By this training, it is learned simultaneous generating fused object detections and generating tracks for each detected object.

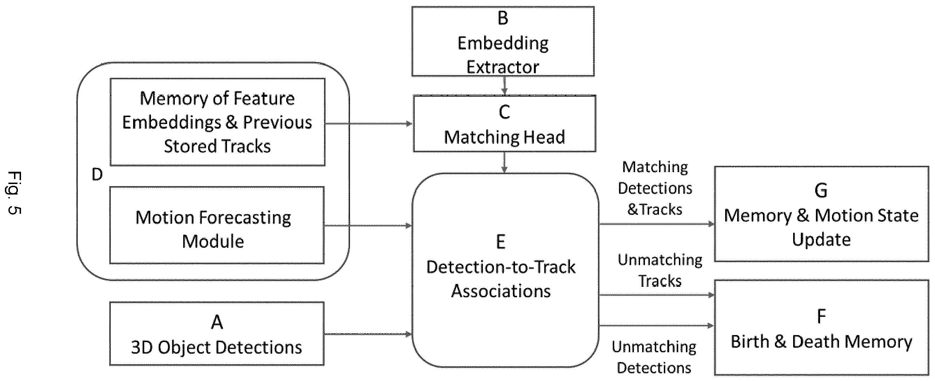

Fig. 5 presents a tracking framework used during inference, basically an inference engine that implements the trained hybrid neural network for performing object detection and tracking on sensor data. Incoming raw radar and camera data are processed by the Fused DEFT model as trained. From the Fused DEFT model there are provided simultaneously: fused object detections, feature embeddings and object tracks. The object detections are outputted by an object detection module A as 3D bounding boxes of detected objects (named 3D object detections); feature embeddings are extracted by an embedding extractor module B at each time step from each object and stored in a memory D; also, appearance features are extracted, and then are used to generate tracks that are stored in the memory D. A matching head C matches similar feature embeddings, using previously stored feature embeddings. A motion forecasting module provides predicted state of tracks to a module E that associates object detections to tracks. In addition, the detection-to-track association module E receives as input the matched feature embeddings Module E performs these associations (re-identification of features) by Hungarian algorithm. Matched or unmatched detections and tracks are used further on to create new objects (birth) and to remove objects or tracks (death) in memory.

The explained tracking framework uses a motion forecasting module. This module avoids situations where objects look very similar in appearance in the embedding space, which introduces confusion between these objects. Therefore, the module geometrically constrains the associations between consecutive frames. As motion model, either LSTM (Long-short Term Memory) cells, Kalman Filter or STM-Kalman filter can be used.

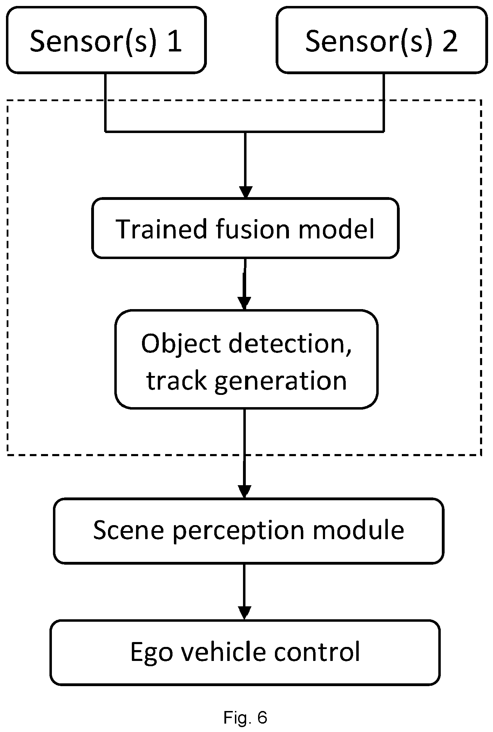

FIG. 6 illustrates an example of a computing system, in accordance with some embodiments. Computing system can be used, for example, for implementing the trained fusion model, for example, according to method of FIG. 4. Computing system can be used for one or more of components of the tracking framework of FIG. 5. Computing system comprises a memory, and at least one processor communicatively coupled to the memory, and memory storing one or more programs for execution by the one or more processors. For example, the mentioned computing system may comprise a vehicle perception control unit configured to receive raw sensor data (radar data and camera data) and perform inference using a fusion model trained according to invention. As output, object track information is generated and sent to a scene perception module, where information about surrounding objects and their trajectory thereof is added. In addition, an automated vehicle control unit may be configured to receive the enriched information from the scene perception module. Finally, a vehicle control decision is made in accordance with the availability of a safe ego-vehicle trajectory, as provided by the ego-vehicle control unit.

Other embodiment may comprise processors and control units belonging to a smart intersection infrastructure or robotics applications.

Computing system can be a computer connected to a network; it can be a client or a server. It can be any suitable type of processor-based system, such as a personal computer, workstation, server, handheld computing device (portable electronic device) such as a phone or tablet, or an embedded system or other dedicated device. Besides the perception and vehicle control units, software, storage, and communication device are provided.

Storage can be any suitable device that provides storage, such as an electrical, magnetic, or optical memory including a RAM, cache, hard drive, removable storage disk, or other non-transitory computer readable medium. Communication device can include any suitable device capable of transmitting and receiving signals over a network, such as a network interface chip or device. The components of the computing system can be connected in any suitable manner, such as via a physical bus or wirelessly.

Processor(s) can be any suitable processor or combination of processors, including any of, or any combination of, a central processing unit (CPU), graphics processing unit (GPU), field programmable gate array (FPGA), and application-specific integrated circuit (ASIC). Software, which can be stored in storage and executed by one or more processors, can include, for example, the programming that embodies the functionality or portions of the functionality of the present disclosure (e.g., as embodied in the devices as described above). For example, software can include one or more programs for execution by one or more processor(s) for performing one or more of the steps of method and/or training method.

Software can also be stored and/or transported within any non-transitory computer-readable storage medium for use by or in connection with an instruction execution system, apparatus, or device, such as those described above, that can fetch instructions associated with the software from the instruction execution system, apparatus, or device and execute the instructions. In the context of this disclosure, a computer-readable storage medium can be any medium, such as storage, that can contain or store programming for use by or in connection with an instruction execution system, apparatus, or device.

Software can also be propagated within any transport medium for use by or in connection with an instruction execution system, apparatus, or device, such as those described above, that can fetch instructions associated with the software from the instruction execution system, apparatus, or device and execute the instructions. In the context of this disclosure, a transport medium can be any medium that can communicate, propagate or transport programming for use by or in connection with an instruction execution system, apparatus, or device. The transport computer readable medium can include, but is not limited to, an electronic, magnetic, optical, electromagnetic, or infrared wired or wireless propagation medium.

Computing system may be connected to a network, which can be any suitable type of interconnected communication system. The network can implement any suitable communications protocol and can be secured by any suitable security protocol. The network can comprise network links of any suitable arrangement that can implement the transmission and reception of network signals, such as wireless network connections, cable networks, DSL, or telephone lines.

Computing system can implement any operating system suitable for operating on the network. Software can be written in any suitable programming language, such as C, C++, Java, or Python. In various embodiments, application software embodying the functionality of the present disclosure can be deployed in different configurations, such as in a client/server arrangement or through a Web browser as a Web-based application or Web service, for example.

A single neural network has been used for object detection and feature matching. Therefore, re-identification features are learned automatically using data annotations. Due to the significant time gap between the n frames of the pair of camera and radar frames used during training, this approach will learn embeddings that are more robust and invariant to severe object view changes. This leads to fewer identification switches, particularly for fast moving scenes containing large inter-frame object displacements. Learned re-identification features can handle more severe instances of occlusions due to the use of depth (i.e., range) information from radar. The re-identification features are internal to the encoder-decoder network. Furthermore, such embeddings gather information from a plurality of intermediate network layers, allowing for a robust representation of objects with different sizes. Re-identification features are therefore sensitive to both local and global information.

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying figures, it is to be noted that various changes and modifications will become apparent to those skilled in the art. Such changes and modifications are to be understood as being included within the scope of the disclosure and examples as defined by the claims. Finally, the entire disclosure of the patents and publications referred to in this application are hereby incorporated herein by reference.

### Patent literature

[1] KR20200106234A
[2] EP3196668A1
[3] CN111967498A
[4] CN111862157A
[5] CN110246159A

### Bibliographical references

[6] "Center-based Radar and Camera Fusion for 3D Object Detection ", authors Ramin Nabati, Hairong Qi, published on 3-8 January 2021, in the 2021 IEEE Winter Conference on Applications of Computer Vision (WACV), DOI: 10.1109/WACV48630.2021.00157
[7] "Detection Embeddings for Tracking ", authors Mohamed Chaabane, Peter Zhang, J. Ross Beveridge, Stephen O'Hara, published on 6 June, 2021, arXiv:2102.02267

## Claims

1. A computer-implemented method for object detection and tracking of at least one object in an ego vehicle environment, **characterized in that** the method uses a hybrid neural network adapted to:
(i) input raw sensor data, generated by at least one camera sensor and at least one radar sensor of the ego vehicle, namely raw camera data and raw radar data,
(ii) process independently raw camera data and raw radar data to generate object detections, to extract respective features from respective raw sensor data, meaning visual features extracted from raw camera data and depth features extracted from raw radar data, and to extract feature embeddings for each detected object,
(iii) fusion of the extracted visual and depth features, and generate fused object detections,
(iv) generating, from the extracted embeddings, tracks for each detected object, and
(v) associating the generated fused object detections to tracks.

2. Method of claim 1, **characterized in that** the raw camera data comprise consecutive image frames generated by camera sensor(s), and the raw radar data comprise consecutive points cloud generated by radar sensor(s).

3. Method according to claims 1 and 2, **characterized in that** visual features of a detected object include center location, orientation, dimensions such as height, width, length, while depth features include depth, range, velocity, rotational velocity, reflectivity signatures.

4. Method of claim 1, **characterized in that** the method further comprises feeding the generated tracks of the detected objects into a scene perception module and further predict an ego vehicle trajectory.

5. Method of claim 4, **characterized in that** the method further comprises automatically controlling the ego vehicle based on the predicted trajectory.

6. A method for generating an end-to-end hybrid neural network for multi-object detection and tracking, the method comprising:
providing an annotated training dataset obtained by processing raw sensor data, namely pairs of consecutive camera and radar frames, n frames apart, the annotated training dataset comprising each object detected in the raw sensor data annotated with a 3D bounding box, and tracks identifiers for each object detected on consecutive camera and radar frames,
training a hybrid neural network on the single annotated training dataset, the neural network comprising:
a raw radar data processing branch, adapted to generate object detections and
depth features for each object detected in radar data,
a detector backbone which processes raw camera data and generates object detections and visual features for each object detected in camera data,
**characterized in that** the detections extracted from radar and camera data, respectively, are fused by a sensor data fusion module integrated in the detector backbone.

7. Method according to claim 6, **characterized in that** the method further comprises processing visual and depth features extracted from camera and radar data, respectively, by an embedding extractor, and providing respective feature embeddings for each object detected in the sensor data, meaning radar feature embeddings and camera feature embeddings.

8. Method according to claims 6 and 7, **characterized in that** the method further comprises re-identification of the detected objects by matching, by a matching head, similar fused detections provided by the sensor fusion module using as input data the respective feature embeddings generated by the embedding extractor, and generating tracks of detected objects.

9. Method according to claims 6, 7 and 8, **characterized in that** the generating fused object detections and generating tracks for each detected object are simultaneously performed.

10. Method according to claims 6 - 9, **characterized in that** the hybrid neural network has an architecture of fused detection embeddings for tracking (Fused DEFT), wherein the radar data processing branch has a CenterFusion architecture, and the detector backbone has a DEFT architecture adapted to input radar data processed by the Center Fusion branch.

11. A computing system for end-to-end multi-object detection and tracking, the system comprises a memory, and at least one processor communicatively coupled to the memory,
and memory storing one or more programs for execution by the one or more processors, **characterized in that** the one or more programs including instructions for:
providing, by at least one camera sensor and at least one radar sensor of the ego vehicle, raw sensor data, namely pairs of consecutive camera and radar frames, n frames apart,
processing the provided raw sensor data and generating an annotated dataset that comprises each object detected in the raw sensor data annotated with a 3D bounding box, and tracks identifiers for each object detected on consecutive camera and radar frames,
training, by a training module, a hybrid neural network to simultaneously perform camera-radar sensor fusion, object detection, and object tracking on the annotated dataset, and deploying a trained fusion learning model,
inferring, by an inference module, the trained fusion model to process raw sensor data, to detect objects and to track the detected objects.

12. Computing system of claim 11, **characterized in that** is an embedded computing system of the ego vehicle.

13. Computing system of claim 11, wherein the one or more programs include instructions for automatically controlling the vehicle based on the object detection and tracking output.

14. Data structure generated by training a hybrid neural network according to any method of claims 6 to 10.

15. An apparatus for multi-object detection and tracking, **characterized in that** the apparatus includes at least one processor, and at least one memory, coupled to the at least one processor, configured to execute method according to the claims 1-5.

16. A computer-readable medium for multi-object tracking, that stores computer-executable instructions, **characterized in that**, when executed, the computer-executable instructions cause at least one processor to execute method according to the claims 1-5.
